# EUROPEAN PATENT APPLICATION

(11) **EP 1 045 006 A2**
(43) Date of publication of application: **18.10.2000**
(21) Application number: 00303047.5
(22) Date of filing: 11.04.2000
(51) Int. Cl.: C08L 83/07, C08K 5/544

(54) **Silicone rubber composition**

(30) Priority: 16.04.1999 JP 11015099
(71) Applicant: Dow Corning Toray Silicone Co., Ltd., Tokyo (JP)
(72) Inventor: Takuman, Osamu c/o Dow Corning Toray Sil. Co. Ltd., Chiba Prefecture (JP); Yoshitake,Makoto c/o Dow Corning Toray Sil.Co.Ltd., Chiba Prefecture (JP); Nakamura, Akito c/o Dow Corning Toray Sil.Co.Ltd., Chiba Prefecture (JP)
(74) Representative: Hall, Marina

(57) **Abstract**

A silicone rubber composition comprising
(A) 100 weight parts of a polydiorganosiloxane having at least one alkenyl groups in each molecule,
(B) 0.1 to 10 weight parts of a silatrane derivative described by general formula: 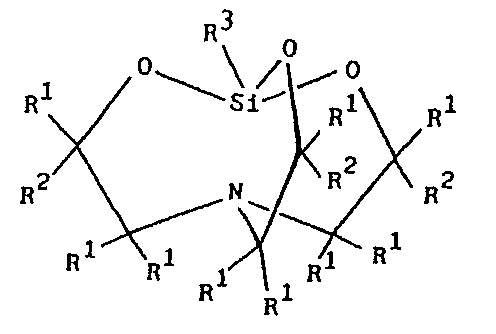 where each R¹ is independently selected from the group consisting of a hydrogen atom and alkyl groups; each R² is independently selected from the group consisting of a hydrogen atom, alkyl groups, and alkenyloxyalkyl groups described by general formula

   ―R⁴―O―R⁵

   where R⁴ is an alkylene group and R⁵ is an alkenyl group; at least one R² is an alkenyloxyalkyl group; and R³ is selected from the group consisting of substituted and unsubstituted monovalent hydrocarbon groups, C₁ to C₁₀ alkoxy groups, glycidoxyalkyl groups, oxiranylalkyl groups, acyloxyalkyl groups, and aminoalkyl groups;
(C) 1 to 80 weight parts of a hydrocarbon oil free of aliphatic unsaturated bonds or an organopolysiloxane oil free of aliphatic unsaturated bonds and silicon-bonded hydrogen atoms; and
(D) a curing agent in an amount sufficient to cure the composition.

## Description

### BACKGROUND OF INVENTION

The present invention is a silicone rubber composition that has excellent mold release properties and adheres well to organic resins during insert molding, multi-color molding, and other types of composite molding with organic resins. Silicone rubbers commonly have the disadvantage that they swell and become much less adhesive when in constant contact with engine oil or other types of lubricating oils. For this reason, silicone rubber compositions containing uncross-linked hydrocarbon oils or organopolysiloxane oils have been proposed in JP (Kokai) 55-135186, 55-144078, and 58-225152.

When such silicone rubber compositions are molded into composites with organic resins, adequate mold release properties are achieved, but the silicone rubber adheres poorly to, and peels easily from, the organic resins, limiting the number of possible applications. It is an objective of the present invention to provide a silicone rubber composition that has excellent mold release properties and adheres well to organic resins during insert molding, multi-color molding, and other types of composite molding with organic resins.

### SUMMARY OF INVENTION

A silicone rubber composition comprising
(A) 100 weight parts of a polydiorganosiloxane having at least one alkenyl groups in each molecule,
(B) 0.1 to 10 weight parts of a silatrane derivative described by general formula: 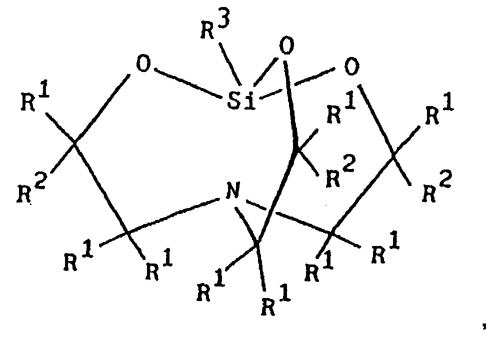 where each R¹ is independently selected from the group consisting of a hydrogen atom and alkyl groups; each R² is independently selected from the group consisting of a hydrogen atom, alkyl groups, and alkenyloxyalkyl groups described by general formula

   ―R⁴―O―R⁵

   where R⁴ is an alkylene group and R⁵ is an alkenyl group; at least one R² is an alkenyloxyalkyl group; and R³ is selected from the group consisting of substituted and unsubstituted monovalent hydrocarbon groups, C₁ to C₁₀ alkoxy groups, glycidoxyalkyl groups, oxiranylalkyl groups, acyloxyalkyl groups, and aminoalkyl groups;
(C) 1 to 80 weight parts of a hydrocarbon oil free of aliphatic unsaturated bonds or an organopolysiloxane oil free of aliphatic unsaturated bonds and silicon-bonded hydrogen atoms; and
(D) a curing agent in an amount sufficient to cure the composition.

### DESCRIPTION OF INVENTION

The silicone rubber composition of the present invention comprises
(A) 100 weight parts of a polydiorganosiloxane having at least one alkenyl groups in each molecule,
(B) 0.1 to 10 weight parts of a silatrane derivative described by general formula: 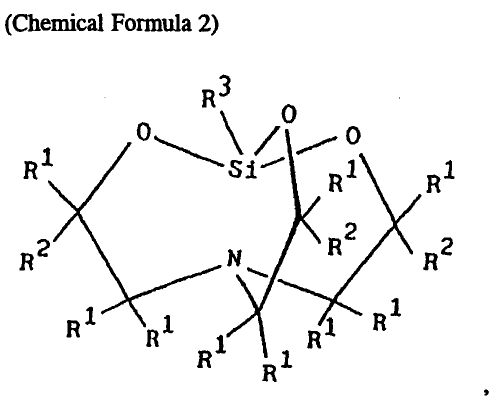 where each R¹ is independently selected from the group consisting of a hydrogen atom and alkyl groups; each R² is independently selected from the group consisting of a hydrogen atom, alkyl groups, and alkenyloxyalkyl groups described by general formula

   ―R⁴―O―R⁵

   where R⁴ is an alkylene group and R⁵ is an alkenyl group; at least one R² is an alkenyloxyalkyl group; and R³ is selected from the group consisting of substituted and unsubstituted monovalent hydrocarbon groups, C₁ to C₁₀ alkoxy groups, glycidoxyalkyl groups, oxiranylalkyl groups, acyloxyalkyl groups, and aminoalkyl groups;
(C) 1 to 80 weight parts of a hydrocarbon oil free of aliphatic unsaturated bonds or an organopolysiloxane oil free of aliphatic unsaturated bonds and silicon-bonded hydrogen atoms; and
(D) a curing agent in an amount sufficient to cure the composition.

The silicone rubber composition of the present invention will now be described in detail. The polydiorganosiloxane comprising component A is the principal component of the present composition. The molecular structure of component A is substantially linear, but part of the molecular chain may have some branching. Examples of the alkenyl groups of component A include vinyl, allyl, and hexenyl, of which vinyl and hexenyl are preferred. In particular, component A must contain at least two alkenyl groups in each molecule when the present composition is cured by a hydrosilylation reaction. Examples of silicon-bonded groups other than the alkenyl groups of component A include substituted or unsubstituted monovalent hydrocarbon groups, for example, alkyl groups such as methyl, ethyl, propyl, butyl, and octyl; aryl groups such as phenyl and tolyl; and halogenated alkyl groups such as chloromethyl and 3,3,3-trifluoropropyl. Examples of groups which may be present in small amounts include methoxy, ethoxy, and other alkoxy groups, as well as the hydroxyl group. No viscosity limitations are imposed on component A, which may range from a product having a viscosity of 100 mPa·s at 25°C to a highly-viscous gum. The viscosity at 25°C should preferably fall within a range of 1000 to 200,000,000 mPa·s.

Examples of the polydiorganosiloxane comprising component A include dimethylvinylsiloxy-terminated polydimethylsiloxanes, trimethylsiloxy-terminated dimethylsiloxane/methylvinylsiloxane copolymers, dimethylvinylsiloxy-terminated dimethylsiloxane/methylvinylsiloxane copolymers, dimethylvinylsiloxy-terminated dimethylsiloxane/methylphenylsiloxane copolymers, dimethylvinylsiloxy-terminated dimethylsiloxane/methyl(3,3,3,-trifluoropropyl)siloxane copolymers, dimethylhexenylsiloxy-terminated polydimethylsiloxanes, trimethylsiloxy-terminated dimethylsiloxane/methylbexenylsiloxane copolymers, dimethylhexenylsiloxy-terminated dimethylsiloxane/methylhexenylsiloxane copolymers, dimethylhexenylsiloxy-terminated dimethylsiloxane/methylphenylsiloxane copolymers, and dimethylhexenylsiloxy-terminated dimethylsiloxane/methyl(3,3,3,-trifluoropropyl)siloxane copolymers.

The silatrane derivative comprising component B, which is designed to improve the adhesion of the present composition to organic resins without affecting its mold release properties, is described by general formula 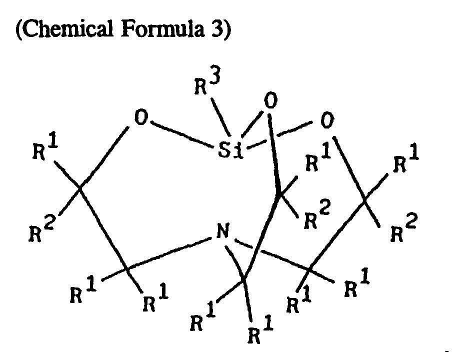 In the formula, each R¹ is independently selected from the group consisting of a hydrogen atom and alkyl groups. Examples of R¹ as alkyl groups include methyl, ethyl, propyl, butyl, pentyl, isopropyl, isobutyl, cyclopentyl, and cyclohexyl. In particular, a hydrogen atom or the methyl group is preferred as R¹. Each R² in the above formula are independently selected from the group consisting of a hydrogen atom, alkyl groups, and alkenyloxyalkyl groups described by general formula

―R⁴―O―R⁵.

At least one R² group is an alkenyloxyalkyl group. The same alkyl groups as those described above with reference to R¹ may be cited as examples of the alkyl groups which can be represented by R². In the alkenyloxyalkyl groups represented by R², the R⁴ in the above formula is an alkylene group, examples of which include methylene, ethylene, methyl methylene, and propylene, of which methylene is preferred. In addition, R⁵ in the above formula is an alkenyl group, examples of which include vinyl, allyl, butenyl, pentenyl, and hexenyl. A C₃ to C₁₀ alkenyl group is preferred for R⁵, and allyl is particularly preferred. Allyloxymethyl and allyloxypropyl groups may be cited as examples of the alkenyloxyalkyl groups represented by R². In addition, R³ in the above formula is selected from the group consisting of substituted and unsubstituted monovalent hydrocarbon groups, C₁ to C₁₀ alkoxy groups, glycidoxyalkyl groups, oxiranylalkyl groups, acyloxyalkyl groups, and aminoalkyl groups. Examples of the R³ monovalent hydrocarbon groups include alkyl groups such as methyl, ethyl, propyl, butyl, pentyl, isopropyl, isobutyl, cyclopentyl, and cyclohexyl; alkenyl groups such as vinyl, allyl, butenyl, pentenyl, and hexenyl; aryl groups such as phenyl, tolyl, and xylyl; aralkyl groups such as benzyl and phenethyl; halogenated alkyl groups such as chloromethyl, 3-chloropropyl, and 3,3,3-trifluoropropyl. Examples of the R³ alkoxy groups include methoxy, ethoxy, and propoxy. The 3-glycidoxypropyl group is an example of R³ as a glycidoxyalkyl group. 4-Oxiranylbutyl and 8-oxiranylbutyl groups are examples of R³ as oxiranylalkyl groups. Acetoxypropyl and 3-methacryloxypropyl groups are examples of R³ as acyloxyalkyl groups. 3-Aminopropyl and *N*-(2-aminoethyl)-3-aminopropyl groups are examples of R³ as aminoalkyl groups.

The following compounds are examples of the silatrane derivative component B.

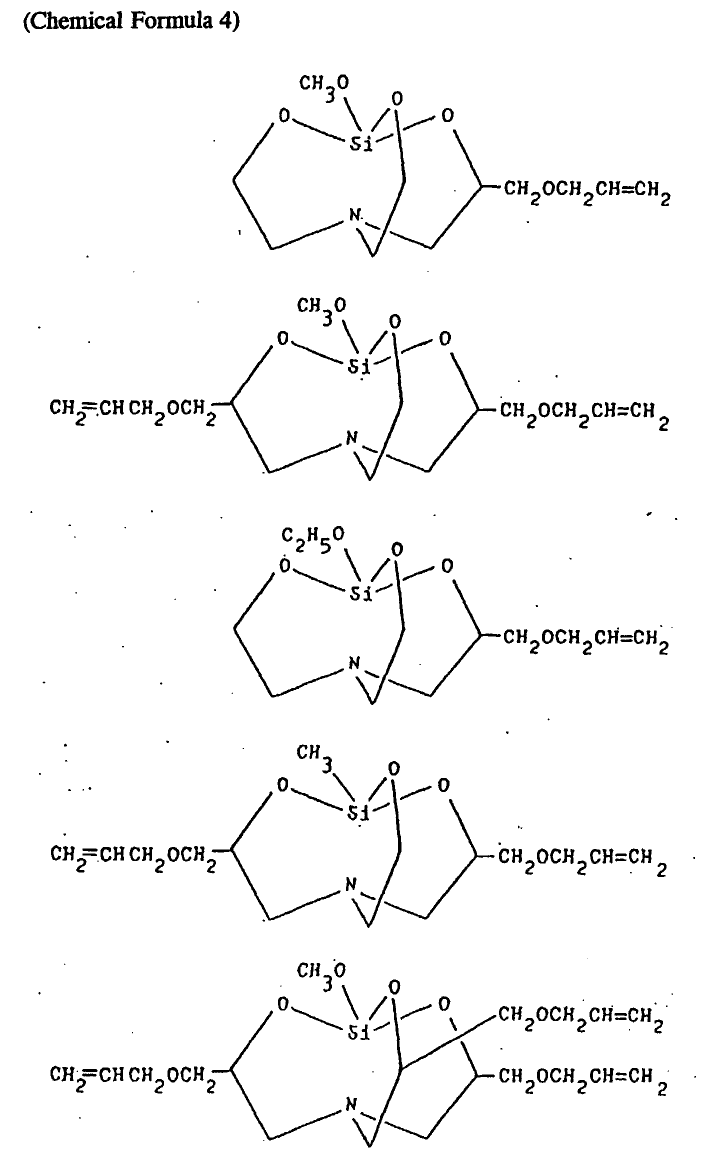

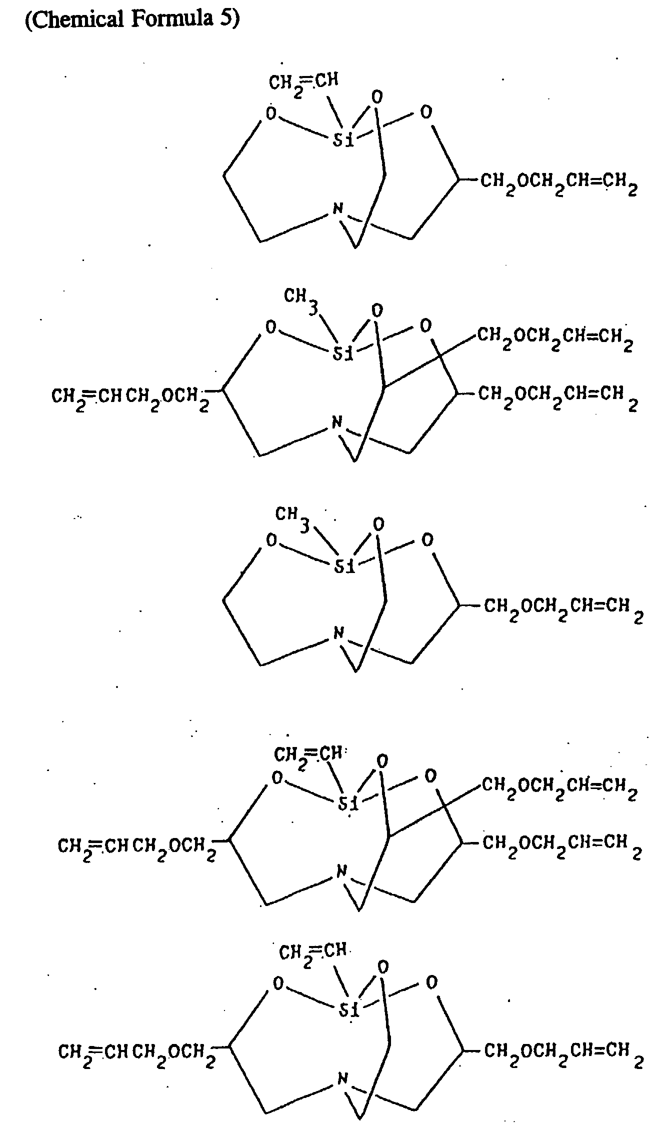

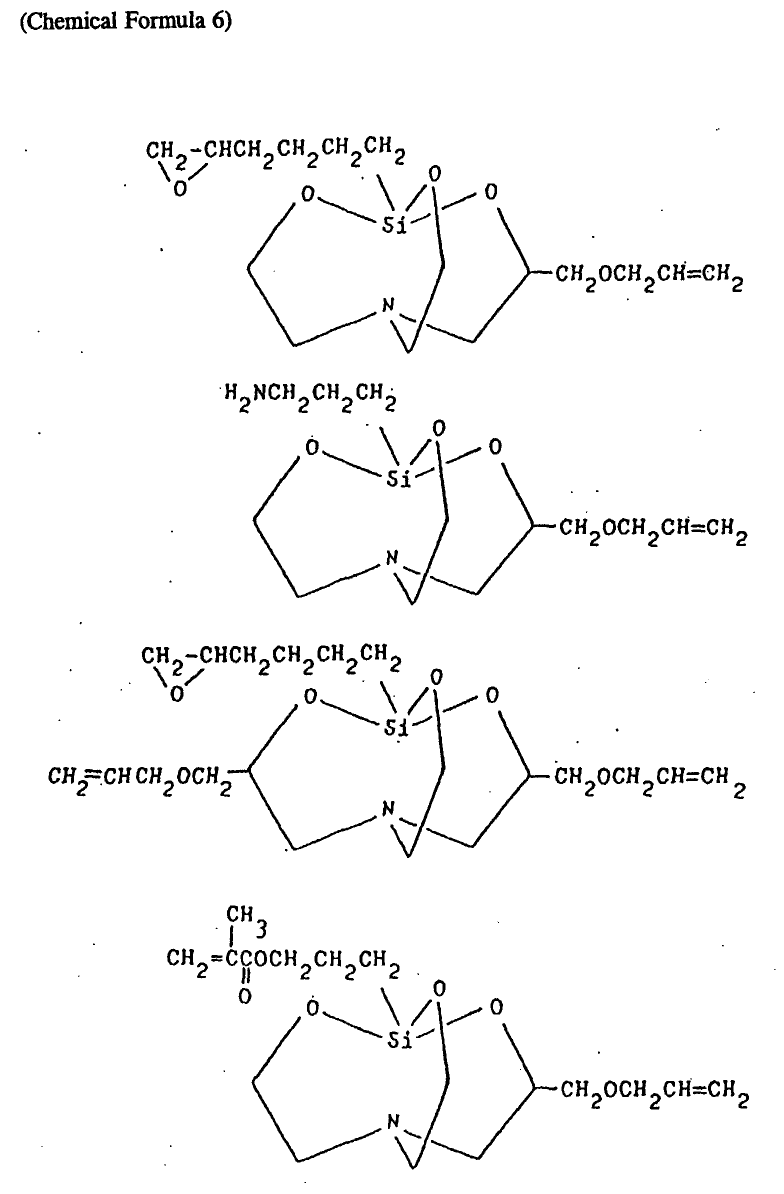

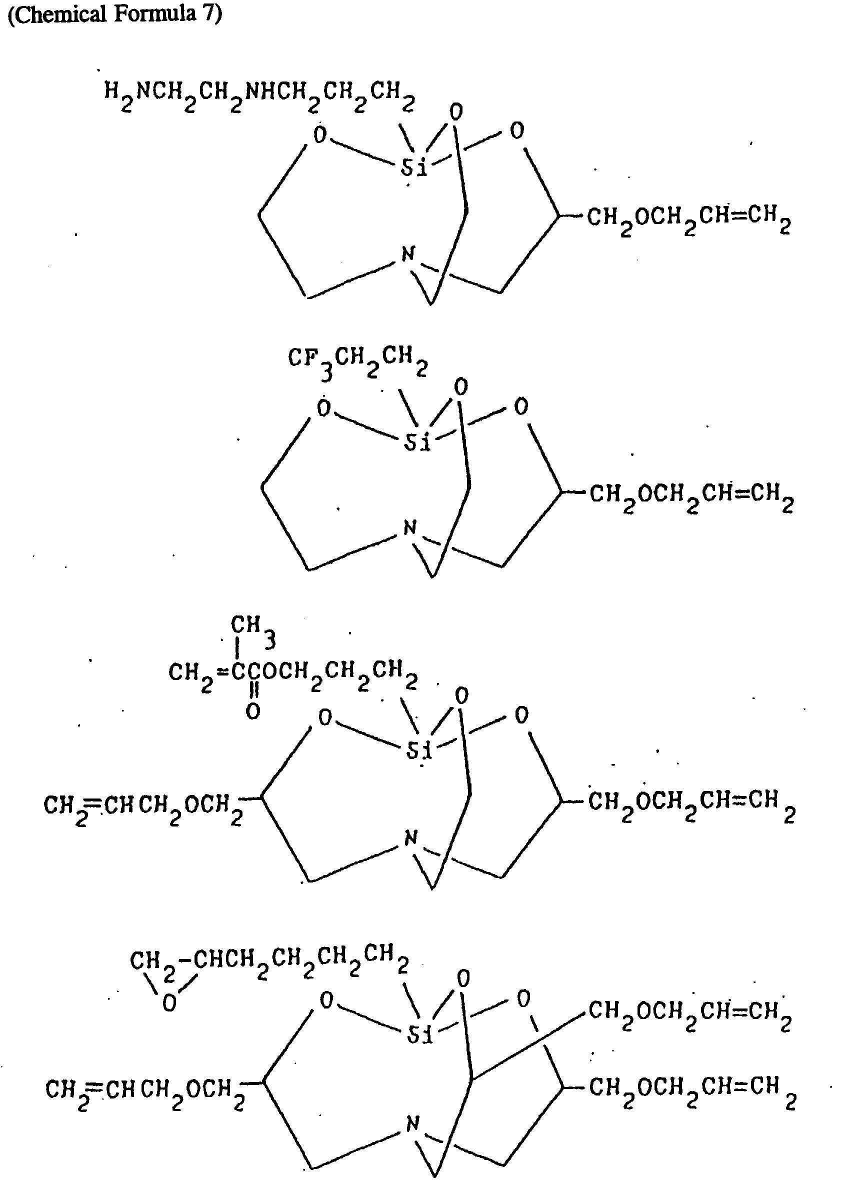

The silatrane derivative component B may, for example, be manufactured by reacting an epoxy compound described by general formula 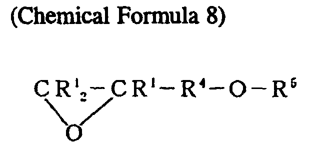 where each R¹ is independently selected from the group consisting of a hydrogen atom and alkyl groups; R⁴ is an alkylene group; and R⁵ is an alkenyl group; and an alkoxysilane compound described by general formula

R⁶Si(OR⁷)₃ ,

where R⁶ is selected from the group consisting of substituted and unsubstituted monovalent hydrocarbon groups, C₁ to C₁₀ alkoxy groups, acyloxyalkyl groups, and aminoalkyl groups and R⁷ is a C₁ to C₁₀ alkyl group; with ammonia or an amine compound described by the general formula

NH_{y}(CR¹₂CR¹₂OH)_{(3―y)}

where each R¹ is independently selected from the group consisting of a hydrogen atom and alkyl groups; and *y* is 1 or 2.

The epoxy resin is a starting material for forming the backbone of the silatrane derivative component B. It is also a starting material for introducing alkenyloxyalkyl groups into the molecules of the silatrane derivative. Each R¹ in the above formula is independently selected from the group consisting of a hydrogen atom and alkyl groups. The same groups as above may be cited as examples of the alkyl groups represented by R¹. In addition, the R⁴ groups in the above formula are alkylene groups, examples of which include the same groups as above. Furthermore, the R⁵ groups in the above formula are alkenyl groups, examples of which include the same groups as above. C₃ to C₁₀ alkenyl groups are preferred, and the allyl group is particularly preferred. Allyl glycidyl ether and butenyl glycidyl ether may be cited as examples of such epoxy compounds.

The alkoxysilane compound is a starting material for forming the backbone of the silatrane derivative component B. Each R⁶ in the above formula is independently selected from the group consisting of substituted and unsubstituted monovalent hydrocarbon groups, C₁ to C₁₀ alkoxy groups, acyloxyalkyl groups, haloalkyl groups, and aminoalkyl groups. The same monovalent hydrocarbon groups as those described above with reference to R³ may be cited as examples of the monovalent hydrocarbon groups represented by R⁶; the same alkoxy groups as those described above with reference to R³ may be cited as examples of the alkoxy groups represented by R⁶; the same acyloxyalkyl groups as those described above with reference to R³ may be cited as examples of the acyloxyalkyl groups represented by R⁶; and the same aminoalkyl groups as those described above with reference to R³ may be cited as examples of the aminoalkyl groups represented by R⁶. In addition, R⁷ in the above formula is a C₁ to C₁₀ alkyl group, examples of which include methyl, ethyl, propyl, and butyl. Examples of such alkoxysilane compounds include tetramethoxysilane, tetraethoxysilane, methyltrimethoxysilane, methyltriethoxysilane, vinyltrimethoxysilane, vinyltriethoxysilane, phenyltrimethoxysilane, 3-methacryloxypropyltrimethoxysilane, 3,3,3-trifluoropropyltrimethoxysilane, nonafluorobutylethyltrimethoxysilane, 3-aminopropyltrimethoxysilane, 3-aminopropyltriethoxysilane, and *N*-(2-aminoethyl)-3-aminopropyltrimethoxysilane.

The ammonia or amine compound is a starting material for forming the backbone of the silatrane derivative component B. In the amine compound, each R¹ in the formula is independently selected from the group consisting of a hydrogen atom and alkyl groups, examples of which are the same as the groups listed above. In the above formula, *y* is 1 or 2. Examples of such amine compounds include 2-hydroxyethylamine, 2,2'-dihydroxyethylamine, and 2-hydroxy-2-methyl-ethylamine.

There are no restrictions on the amounts in which the epoxy compound and alkoxysilane compound are added with respect to the ammonia in the above-mentioned manufacturing method, but in order to suppress by-products and obtain the silatrane derivative at a good yield, when the reaction is conducted under conditions such that the ammonia will not be lost during the reaction, it is preferable for the epoxy compound to be added in an amount of 2 to 20 mol per mole of ammonia, with a range of 3 to 15 mol being even better. It is also preferable for the amount in which the alkoxysilane compound is added to be from 0.5 to 50 mol per mole of ammonia, with a range of 1 to 20 mol being even better. This means that it is recommended that this alkoxysilane compound be used in about the stoichiometric amount or an excess amount with respect to the ammonia in this manufacturing method. In general, by-products will be suppressed by an excess of alkoxysilane and such excess may be used so long as the reaction is not inappropriately slowed. The unreacted alkoxysilane compound can be separated and recovered from the silatrane derivative by distillation or the like as needed after the reaction. This reaction can also be conducted while ammonia gas is blown into the mixture of the epoxy compound and the alkoxysilane compound. When the reaction is conducted in an open system, part of the ammonia will not react and will be released outside the system, so it must be used in an excess amount large enough to compensate for this loss.

There are no restrictions on the amount in which the epoxy compound and alkoxysilane compound are added with respect to the amine compound in this manufacturing method, but in order to obtain the silatrane derivative at a good yield, when *y* in the formula for the amine compound is 1, the epoxy compound should be used in an amount of 0.5 to 10 mol per mole of the amine compound, with a range of 0.8 to 5 mol being even better. When *y* in the formula for the amine compound is 2, the epoxy compound should be used in an amount of 1.5 to 20 mol, with a range of 1.8 to 10 mol being even better, and an amount of about 2 mol being particularly favorable. It is also preferable for the amount in which the alkoxysilane compound is added to be from 0.5 to 50 mol per mole of the amine compound, with a range of 1 to 20 mol being even better. This means that it is recommended that the alkoxysilane compound be used in about a stoichiometric amount or an excess amount with respect to the amine compound in this manufacturing method. In general, by-products will be suppressed by use of an excess of the alkoxysilane compound and such excess may be used so long as the reaction is not undesirably slowed. The unreacted and remaining alkoxysilane compound can be separated and recovered from the silatrane derivative by distillation or the like as needed after the reaction.

In the above-mentioned manufacturing method, the reaction will proceed at normal room temperature, but heating up to 100°C is preferred in order to shorten the reaction time. The use of an organic solvent is optional in the above-described manufacturing method, and examples of organic solvents that can be used include hexane, heptane, octane, and other aliphatic hydrocarbons; toluene, xylene, and other aromatic hydrocarbons; methanol, ethanol, isopropanol, and other alcohols; acetone, methyl isobutyl ketone, and other ketones; diethyl ether, tetrahydrofuran, and other ethers; ethyl acetate, isoamyl acetate, and other esters; and dimethylformamide, dimethylacetamide, and other amide compounds. In particular, the use of an alcohol such as methanol or ethanol allows the reaction time to be shortened and the targeted silatrane derivative to be obtained at a better yield. In the manufacturing method of the present invention, when an alcohol is added, it should preferably have the same number of carbon atoms as the silicon-bonded alkoxy groups in the starting material alkoxysilane compound in order to avoid a complex mixture resulting from an exchange reaction with the silicon-bonded alkoxy groups. Also, when an alcohol is added in the above-described manufacturing method, the reaction can be markedly shortened and the yield of the obtained silatrane derivative can be enhanced by conducting the reaction at the reflux temperature of this alcohol.

The content of component B in the present composition should fall within a range of 0.1 to 10 weight parts per 100 weight parts of component A. This is because the adhesion of the resulting silicone rubber to organic resins tends to be adversely affected when the content of component B falls below the lower limit of this range, and the mechanical strength of the resulting silicone rubber tends to decrease when the content exceeds the upper limit of this range.

Component C is a hydrocarbon oil free of aliphatic unsaturated bonds or an organopolysiloxane oil free of aliphatic unsaturated bonds and of silicon-bonded hydrogen atoms and is added to the present composition to improve the mold release properties, to reduce the swelling of the resulting silicone rubber when in constant contact with a lubricating engine oil or other mineral oil, and to minimize reduction of adhesion to organic resins. Examples of the hydrocarbon oil comprising component C are paraffin-based hydrocarbon oils, naphthene-based hydrocarbon oils, aromatic hydrocarbon oils, and mixtures of two or more of the above. Although this hydrocarbon oil is not limited in any way in terms of its viscosity as long as the oil remains liquid at room temperature, a viscosity of 1 to 200,000 mPa·s at 25°C is preferred because of the stability of the resulting silicone rubber composition. Process oil is a commercially available example of this type of hydrocarbon oil.

The organopolysiloxane oil which comprises component C is not subject to any particular limitations as long as it has no aliphatic unsaturated bonds and no silicon-bonded hydrogen atoms in its molecules. An organopolysiloxane described by general formula

R₃SiO(R₂SiO)ₙSiR₃

is preferred. Each R in the above formula is an independently selected substituted or unsubstituted monovalent hydrocarbon groups devoid of aliphatic unsaturated bonds, for example, alkyl groups such as methyl, ethyl, propyl, butyl, and octyl; aryl groups such as phenyl and tolyl; cycloalkyl groups such as cyclopentyl and cyclohexyl; aralkyl groups such as benzyl and phenethyl; and halogenated alkyl groups such as chloromethyl, 3-chloropropyl, and 3,3,3-trifluoropropyl. It is preferred that R by an alkyl group or phenyl. In particular, at least 5 mol %, and preferably at least 20 mol %, of the R groups should be phenyl groups. Examples of such organopolysiloxane oils are trimethylsiloxy-terminated dimethylpolysiloxanes, trimethylsiloxy-terminated dimethylsiloxane/methylphenylsiloxane copolymers, trimethylsiloxy-terminated dimethylsiloxane/diphenylsiloxane copolymers, and mixtures of two or more of the above. Although the organopolysiloxane oil is not limited in any way in terms of its viscosity as long as the oil remains liquid at room temperature, a viscosity of 1 to 200,000 mPa·s at 25°C is preferred because of the stability of the resulting silicone rubber composition.

The amount of component C in the present composition should fall within a range of 1 to 80 weight parts, and preferably 5 to 50 weight parts, per 100 weight parts of component A. This is because the mold release properties of the resulting silicone rubber tend to be adversely affected and the swelling of the resulting silicone rubber in lubricating oil or the like tends to become more pronounced when the content of component C falls below the lower limit of this range, and the mechanical strength of the resulting silicone rubber tends to decrease when the content exceeds the upper limit of this range.

The curing agent component D is used to cure the present composition. Examples include organic peroxides and combinations of platinum-based catalysts and organohydrogen polysiloxanes. Examples of the organic peroxides which can comprise component D include benzoyl peroxide, bis(*o*-methyl benzoyl peroxide), bis(*m*-methyl benzoyl peroxide), bis(*p*-methyl benzoyl peroxide), 2,3-dimethyl benzoyl peroxide, 2,4-dimethyl benzoyl peroxide, 2,6-dimethyl benzoyl peroxide, 2,3,4-trimethyl benzoyl peroxide, 2,4,6-trimethyl benzoyl peroxide, and other methyl-substituted benzoyl peroxides, as well as *t*-butyl perbenzoate, dicumyl peroxide, 2,5-dimethyl-2,5-di(*t*-butylperoxy)hexane, *t*-butylperoxyisopropyl monocarbonate, and *t*-butylperoxyacetate. A mixture of two or more of these organic peroxides may also be used.

When component D comprises a platinum-based catalyst and an organohydrogenpolysiloxane, the organohydrogensiloxane should preferably have at least two silicone-bonded hydrogen atom in each molecule. The silicone-bonded hydrogen atoms in the organohydrogenpolysiloxane are catalyzed by the platinum-based catalyst to undergo a hydrosilylation reaction with the alkenyl groups in component A making it possible to cure the composition. Examples of organic groups bonded to the silicon atoms in the organohydrogenpolysiloxane include substituted or unsubstituted monovalent hydrocarbon groups devoid of aliphatic unsaturated bonds, such as methyl, ethyl, propyl, butyl, octyl, and other alkyl groups; phenyl, tolyl, and other aryl groups; and chloromethyl, 3-chloropropyl, 3,3,3-trifluoropropyl, and other halogenated alkyl groups. The organohydrogenpolysiloxane may have a linear molecular structure, a linear molecular structure that contains branches, a cyclic molecular structure, or a resinous molecular structure. Although not limited in terms of viscosity, the organohydrogenpolysiloxane should preferably have a viscosity of 3 to 10,000 mPa·s at 25°C. The platinum-based catalyst is designed to cure the present composition by a hydrosilylation reaction and may, for example, be microparticulate platinum, chloroplatinic acid, alcohol-modified chloroplatinic acid, a platinum diketone complex, a platinum olefin complex, a platinum alkenylsiloxane complex, a product obtained by supporting platinum on a powder (alumina, silica, carbon black, or the like), or thermoplastic resin microparticles containing these platinum-based catalysts in an amount of 0.01 wt% or greater in terms of platinum. The thermoplastic resin constituting these thermoplastic resin microparticles should preferably have a softening point of 50 to 150°C. The thermoplastic resin microparticles should also have an average particle diameter of 0.01 to 10 µm. The thermoplastic resin may, for example, be a thermoplastic silicone resin, thermoplastic polycarbonate resin, thermoplastic acrylic resin, thermoplastic methyl methacrylate resin, thermoplastic polysilane resin, thermoplastic polystyrene resin, or thermoplastic methylcellulose resin. When thermoplastic resin microparticles containing a platinum-based catalyst in an amount of 0.01 wt% or greater (in terms of platinum) is used as the platinum-based catalyst for the present composition, favorable results are obtained because the resulting silicone rubber composition possesses improved storage stability at room temperature.

The content of component D in the present composition is not subject to any particular limitations as long as this content is sufficient for curing the present composition. When, however, an organic peroxide is used as component D, its content should preferably be 0.1 to 15 weight parts per 100 weight parts of component A. When a combination of an organohydrogenpolysiloxane and a platinum-based catalyst is used as component D, its content should be such that the amount of the silicon-bonded hydrogen atoms in the organohydrogenpolysiloxane is 0.5 to 20 mol, and preferably 1 to 10 mol, per mole of the alkenyl groups in component A. This is because a composition whose organohydrogenpolysiloxane silicon-bonded hydrogen content is below the lower limit of the this range tends to be less amenable to curing, whereas exceeding the upper limit of the range tends to reduce the mechanical strength of the resulting silicone rubber. In addition, the content of the platinum-based catalyst used should provide 0.1 to 500 weight parts platinum, and preferably 1 to 100 weight parts platinum, per 1,000,000 weight parts of component A. This is because a composition whose platinum-based catalyst content is below the lower limit of the above-described range tends to cure very slowly, whereas a content above the upper limit of the above-described range fails to produce a markedly higher curing rate and creates a danger that the resulting silicone rubber will be discolored.

Reinforcing filler E may also be added to the present composition in order to improve the mechanical strength of the resulting silicone rubber. Dry-process silica such as fumed silica, and wet-process silica such as precipitation silica may be cited as examples of the reinforcing filler component E. It is also possible to use silica whose surface has been rendered hydrophobic with organochlorosilanes, organoalkoxysilanes, organosilazanes, organopolysiloxanes, organocyclopolysiloxanes, and other organosilicon compounds. The particle diameter of component E should preferably be 50 µm or less, and the BET specific surface area should preferably be 50 m²/g or greater, and particularly 100 m²/g or greater.

The content of component E in the present composition should fall within a range of 1 to 100 weight parts per 100 weight parts of component A. This is because the resulting silicone rubber may not have adequate mechanical strength if the content of component E falls below the lower limit of this range, and it is more difficult to uniformly distribute component E in the silicone rubber composition if the upper limit of this range is exceeded.

The following optional components may also be added to the present composition: iron oxide, rare-earth compounds, and other heat-resistant fillers; manganese carbonate, fumed titanium dioxide, aluminum hydroxide, magnesium hydroxide, and other flame-retardant fillers; quartz powder, diatomaceous earth, mica, aluminum oxide, calcium oxide, carbon black, and other extending fillers; and pigments.

One or more of the following cure inhibitors should preferably be added in order to improve the handling or storage stability of the present composition when a combination of an organohydrogenpolysiloxane and a platinum-based catalyst is used as component D: 2-methyl-3-buten-2-ol, 2-phenyl-3-buten-2-ol, 3-methyl-1-hexen-3-ol, 1,5-hexadiyne, 1,6-heptadiyne, and other acetylene-based compounds; 1-ethenyl-1-cyclohexanol and other ene-yne compounds; 1,3-divinyltetramethyldisiloxane, 1,3,5,7-tetravinyltetramethylcyclotetrasiloxane, 1,3-divinyl-1,3-diphenyldimethyldisiloxane, and other alkenylsiloxane oligomers; tributylamine, tetramethylethylenediamine, benzotriazole, and other nitrogen-containing compounds, triphenylphosphine and other phosphorus-containing compounds; and sulfur-containing compounds, hydroperoxy compounds, maleic acid derivatives, and other curing inhibitors. Such curing inhibitors should preferably be added in an amount of 0.005 to 10 weight parts per 1,000,000 weight parts of component A.

The present composition may be prepared by the uniform mixing of the above-described components. However when using a combination of a platinum-based catalyst and an organohydrogenpolysiloxane it is preferable to store the composition as a two-component system comprising a silicone composition consisting of a platinum-based catalyst and components A, B, and C, and a silicone composition consisting of component A and an organohydrogenpolysiloxane.

The present composition containing the silatrane derivative component B, the composition has excellent mold release properties and adheres well to polyethylene resins, polypropylene resins, PET resins, PBT resins, and other saturated polyester resins; polystyrene resins, AS resins, ABS resins, polyamides, polycarbonates, acrylic resins, methacrylic resins, and other thermoplastic resins; phenol resins, urea resins, melamine resins, unsaturated polyester resins, alkyd resins, epoxy resins, and other thermosetting resins; and reinforced resins obtained by reinforcing the aforementioned resins with glass fibers or the like. Therefore, it is possible to performs the following types of molding with high efficiency with the present composition: insert molding as part of injection molding involving the use of organic resins and silicone rubber compositions, multicolor molding such as two-color molding, and other types of composite molding.

The silicone rubber composition of the present invention will now be described in detail through examples. The viscosity given in these examples is the value at 25°C.

Reference Example. 12.2 g (0.2 mol) Of 2-hydroxyethylamine, 81.7 g (0.6 mol) of methyltrimethoxysilane, 57.1 g (0.5 mol) of allyl glycidyl ether, and 32 g of methanol were put in a 500-mL, four-neck flask equipped with an agitator, a thermometer, and a reflux condenser. The system was heated and agitated for 8 hours at the reflux temperature of methanol. The mixture was then transferred to a flask, and the low-boiling component was distilled off using a rotary evaporator to yield 63.3 g of a faintly yellow transparent liquid. This transparent liquid was subjected to ²⁹Si-nuclear magnetic resonance analysis and ¹³C-nuclear magnetic resonance analysis, which confirmed that the silatrane derivative described by the following formula had been produced. This silatrane derivative was contained in a proportion of at least 90 wt%.

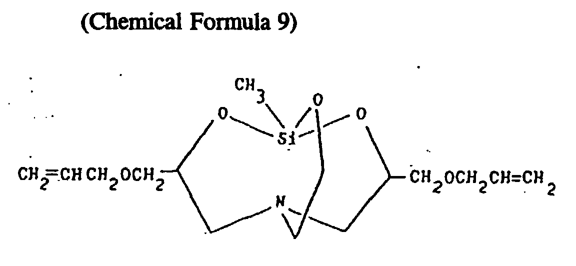

Example 1. 100 Weight parts of a dimethylvinylsiloxy-terminated dimethylpolysiloxane having a viscosity of 10,000 mPa·s, 30 weight parts of fumed silica with a BET specific surface area of 200 m²/g, 5 weight parts of hexamethyldisilazane (surface treatment agent for the silica), and 2 weight parts of water were uniformly mixed and then heated and mixed for 2 hours at 170°C in a vacuum, yielding a silicone rubber base compound. The following components were then mixed into the base compound to form a silicone rubber composition (the amounts are per 100 weight parts of the base compound): 1.0 weight part of the silatrane derivative prepared in Reference Example 1, 5 weight parts of a trimethylsiloxy-terminated dimethylsiloxane/methylphenylsiloxane copolymer (25 mol% dimetylsiloxane units, 75 mol% methylphenylsiloxane units) having a viscosity of 130 mPa·s, 2.6 weight parts of a trimethylsiloxy-terminated dimetylsiloxane/methylhydrogensiloxane copolymer (having five silicon-bonded hydrogen atoms in each molecule and providing 4.7 mol of silicone-bonded hydrogen atoms per mole of vinyl groups in the dimethylpolysiloxane of the base compound) with a viscosity of 5 mPa·s, 0.06 weight part 3-methyl-1-hexyn-3-ol, and a 1,3-divinyltetramethyldisiloxane solution of a platinum/1,3-divinyltetramethyldisiloxane complex, used such that the amount of platinum metal atoms was 7 weight parts per 1,000,000 weight parts of the dimethylpolysiloxane contained in the base.

The organic resin test piece described in Table 1 was then placed in a chrome-plated mold, the above-described silicone rubber composition was injected from above, and the material was heated and cured for 10 minutes at 120°C. The adhesion of the silicone rubber to the organic resin test piece and the mold release properties of the silicone rubber were then observed. Adhesion of the silicone rubber to organic resins was graded in the following manner: a "○" was given if the silicone rubber underwent cohesive failure when an attempt was made to peel off the silicone rubber from the organic resin, a "△" was given if the silicone rubber could be peeled off along the interface with the organic resin but still had adequate adhesion, and an "X" was given if the silicone rubber could be easily peeled off along the interface with the organic resin.

The release properties of the silicone rubber were analyzed by a method in which a silicone rubber composition was heated and cured for 10 minutes at 120°C in a transfer mold provided with a middle plate corresponding to a silicone rubber shape of 5-mm diameter and 10-mm height, the middle plate was then taken out, and the extrusion force (N) exerted when the silicone rubber was taken out was measured using a push-pull scale (FB-20K, manufactured by Imada). Changes in the viscosity and appearance of the silicone rubber composition were also monitored after this composition was allowed to stand for 3 days at room temperature. The results are shown in Table 1.

Example 2 A silicone rubber composition was prepared in the same manner as described in Example 1 except that the same amount of a paraffin-based hydrocarbon oil (Dyna Process Oil PW-380, manufactured by Idemitsu Kosan) wit a viscosity of 30 mPa·s was added instead of the trimethylsiloxy-terminated dimethylsiloxane/methylphenylsiloxane copolymer used in Example 1. This silicone rubber composition was cured in the same manner as in Example 1, and the mold release properties of the resulting silicone rubber and its adhesion to organic resin test pieces were evaluated in the same manner as in Example 1. Changes in the viscosity and appearance of the silicone rubber composition were also monitored after this composition was allowed to stand for 3 days at room temperature. The results are shown in Table 1.

Comparison Example 1. A silicone rubber composition was prepared in the same manner as in Example 1 except that the silatrane derivative used in Example 1 was not added. This silicone rubber composition was cured in the same manner as in Example 1, and the mold release properties of the resulting silicone rubber and its adhesion to organic resin test pieces were evaluated in the same manner as in Example 1. Changes in the viscosity and appearance of the silicone rubber composition were also monitored when the composition was allowed to stand for 3 days at room temperature. The results are shown in Table 1.

Example 3. The following components were mixed together to form a silicone rubber composition (the amounts shown are per 100 weight parts of the silicone rubber base compound prepared in Example 1): 1 weight part of the silatrane derivative prepared in Reference Example 1; 2.6 weight parts of a trimethylsiloxy-terminated dimethylsiloxane/methylhydrogensiloxane copolymer (in which the amount of the silicone-bonded hydrogen atoms in the copolymer was 1.5 mol per mole of the vinyl groups in the dimethylpolysiloxane contained in the base compound) with a viscosity of 5 mPa·s; 0.06 weight part 3-methyl-1-hexyn-3-ol; and a microparticulate polycarbonate resin containing a platinum-based catalyst (in an amount of 0.4 wt% as platinum metal) and having an average particle diameter of 1 µm, obtained by dispersing a platinum/1,3-divinyltetramethyldisiloxane complex in a thermoplastic polycarbonate resin and used such that the amount of platinum metal atoms was 7 weight parts per 1,000,000 weight parts of the dimethylpolysiloxane contained in the base compound. This silicone rubber composition was cured in the same manner as in Example 1, and the mold release properties of the resulting silicone rubber and its adhesion to organic resin test pieces were evaluated in the same manner as in Example 1. Changes in the viscosity and appearance of the silicone rubber composition were also monitored when this composition was allowed to stand for 3 days at room temperature. The results are shown in Table 1.

**Table 1**

| | Example 1 | Example 2 | Example 3 | Comparison Example 1 |
|---|---|---|---|---|
| Adhesion | | | | |
| PBT resin | ○ | △ | ○ | X |
| 6-Nylon resin | △ | △ | ○ | X |
| ABS resin | ○ | ○ | ○ | X |
| Polycarbonate resin | ○ | △ | ○ | X |
| Mold release properties (N) | 10 | 13 | 11 | 15 |
| Change in viscosity | Curing | Curing | No change | Curing |
| Change in appearance | - | Partial separation | No change | - |

Example 4. 100 Weight parts of a dimethylvinylsiloxy-terminated dimethylsiloxane/methylvinylsiloxane copolymer in the form of a gum having a degree of polymerization of 5,000 and comprising 99.87 mol% dimethylsiloxane units and 0.13 mol% methylvinylsiloxane units, 45 weight parts of wet-process precipitated silica with a BET specific surface area of 200 m²/g, and 4.5 weight parts of a silanol-terminated dimethylpolysiloxane oligomer (surface treatment agent for the silica) with a viscosity of 30 mPa·s were mixed in a mixer and then mixed for another 60 minutes at 175°C, yielding a silicone rubber base compound. 1 Weight part of the silatrane derivative prepared in Reference Example 1, 5 weight parts of a trimethylsiloxy-terminated dimethylsiloxane/methylphenylsiloxane copolymer (25 mol % dimethylsiloxane units, 75 mol % methylphenylsiloxane units) having a viscosity of 130 mPa·s, and 0.6 weight part of a paste containing equal amounts of *t*-butylperoxyisopropyl monocarbonate and a trimethylsiloxy-terminated dimethylpolysiloxane with a viscosity of 50 mPa·s were then added to 100 weight parts of the base compound on a two-roll mill and the ingredients were uniformly mixed to form a silicone rubber composition.

The organic resin test pieces described in Table 2 was then placed in a mold, the above-described silicone rubber composition was dispensed from a two-roll mill and placed on the test pieces and the material was heated and cured for 10 minutes at 150°C. The adhesion of the silicone rubber to the organic resin test pieces and the mold release properties of the silicone rubber were then observed. Adhesion of the silicone rubber to organic resins was graded in the following manner: a "○" was given if the silicone rubber underwent cohesive failure when an attempt was made to peel off the silicone rubber from the organic resin, a "△" was given if the silicone rubber could be peeled off along the interface with the organic resin but still had adequate adhesion, and an "X" was given if the silicone rubber could be easily peeled off along the interface with the organic resin. The release properties of the silicone rubber were analyzed by a method in which a silicone rubber composition was heated and cured for 10 minutes at 150°C in a transfer mold provided with a middle plate corresponding to a silicone rubber shape of 5-mm diameter and 10-mm height, the middle plate was then taken out, and the extrusion force (N) exerted when the silicone rubber was taken out was measured using a push-pull scale (FB-20K, manufactured by Imada). The results are shown in Table 2.

Comparison Example 2. A silicone rubber composition was prepared in the same manner as in Example 4 except that the silatrane derivative used in Example 4 was not added. This silicone rubber composition was cured in the same manner as in Example 4 and the mold release properties of the resulting silicone rubber and its adhesion to organic resin test pieces were evaluated in the same manner as in Example 4. The results are shown in Table 2.

**Table 2**

| | Example 4 | Comparison Example 2 |
|---|---|---|
| Adhesion | | |
| PBT resin | ○ | X |
| Epoxy resin | ○ | X |
| Mold release properties (N) | 10 | 15 |

## Claims

1. A silicone rubber composition comprising:
(A) 100 weight parts of a polydiorganosiloxane having at least one alkenyl groups per molecule;
(B) 0.1 to 10 weight parts of a silatrane derivative described by general formula: 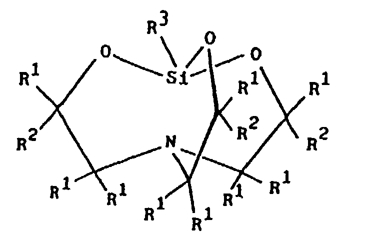 where each R¹ is independently selected from the group consisting of a hydrogen atom and alkyl groups; each R² is independently selected from the group consisting of a hydrogen atom, alkyl groups, and alkenyloxyalkyl groups described by general formula
―R⁴―O―R⁵
where R⁴ is an alkylene group and R⁵ is an alkenyl group; at least one R² group is an alkenyloxyalkyl group; and R³ is selected from the group consisting of substituted and unsubstituted monovalent hydrocarbon groups, C₁ to C₁₀ alkoxy groups, glycidoxyalkyl groups, oxiranylalkyl groups, acyloxyalkyl groups, and aminoalkyl groups;
(C) 1 to 80 weight parts of a hydrocarbon oil free of aliphatic unsaturated bonds or an organopolysiloxane oil free of aliphatic unsaturated bonds and of silicon-bonded hydrogen atoms; and
(D) a curing agent in an amount sufficient to cure the composition.

2. A silicone rubber composition as defined in Claim 1 further comprising (E) 1 to 100 weight parts reinforcing filler per 100 weight parts of component A.

3. A silicone rubber composition as defined in Claim 1 or Claim 2, wherein component D comprises an organohydrogenpolysiloxane and a platinum-based catalyst.

4. A silicone rubber composition as defined in Claim 3, wherein the platinum-based catalyst is incorporated into a microparticulate thermoplastic in an amount providing greater than 0.01 wt% of platinum metal atoms.

5. A silicone rubber composition as defined in Claim 1 or Claim 2, wherein component D is an organic peroxide.

6. A silicone rubber composition as defined in any of Claims 1 to 5, wherein the polydiorganosiloxane has a viscosity at 25°C within a range of 1000 to 200,000,000 mPa·s.

7. A silicone rubber composition as defined in any of Claims 1 to 6, wherein R¹ is selected from the group consisting of a hydrogen atom and methyl, R⁴ is methylene, and R⁵ is allyl.

8. A silicone rubber composition as defined in any of Claims 1 to 7, wherein component C is a hydrocarbon oil free of aliphatic unsaturation selected from the group consisting of paraffin-based hydrocarbon oils, naphthene-based hydrocarbon oils, aromatic hydrocarbon oils, and mixtures thereof.

9. A silicone rubber composition as defined in Claim 8, wherein the hydrocarbon oil has a viscosity at 25°C of 1 to 200,000 mPa·s.

10. A silicone rubber composition as defined in any of Claims 1 to 7, wherein component C is an organopolysiloxane oil described by general formula
R₃SiO(R₂SiO)ₙSiR₃
where each R is an independently selected substituted or unsubstituted monovalent hydrocarbon group devoid of aliphatic unsaturated bonds.

11. A silicone rubber composition as defined in Claim 10, wherein at least 20 mol% of the R groups are phenyl.

12. A silicone rubber composition as defined in Claim 10, wherein the organopolysiloxane oil has a viscosity at 25°C of 1 to 200,000 mPa·s.

13. A silicone rubber composition as defined in any of Claims 1 to 12, wherein component C comprises about 5 to 50 weight parts per 100 weight parts of component A.

14. A silicone rubber composition as defined in any of Claims 1 to 13, wherein component B is described by formula
